# EUROPÄISCHE PATENTANMELDUNG

(11) **EP 0 911 189 A2**
(43) Veröffentlichungstag der Anmeldung: **28.04.1999**
(21) Anmeldenummer: 98250376.5
(22) Anmeldetag: 23.10.1998
(51) Int. Cl.: B60C 23/06

(54) **Verkürzungselement für Reifenketten**

(30) Priorität: 24.10.1997 DE 19748940
(71) Anmelder: RUD-KETTENFABRIK RIEGER & DIETZ GMBH U. CO., 73432 Aalen-Unterkochen (DE)
(72) Erfinder: Liesch, Eugen, 73432 Aalen-Waldhausen (DE)
(74) Vertreter: Böning, Manfred, Dr.-Ing.

(57) **Zusammenfassung**

Bei einem als integraler Bestandteil eines Kettenstranges nutzbaren Verkürzungselement mit einem im wesentlichen C-förmigen Grundkörper (10), dessen sich gegenüberliegende Enden Haken (11,12) bilden, weist ein Haken (11) zwei Stützflächen (13,16) für Kettenglieder unterschiedlicher Orientierung auf. In einer ersten unverkürzten Stellung des Verkürzungselementes stützt sich auf einer der Stützflächen ein senkrecht zur Grundkörperebene orientiertes Kettenglied (8) ab, während sich in der verkürzten Stellung ein in der Grundkörperebene gelegenes Glied auf der zweiten Stützfläche abstützt. Zum Verkürzen des Kettenstranges wird das Verkürzungselement um 180° gedreht und der zwei Stützflächen (13,16) aufweisende Haken (11) in ein senkrecht zur Grundkörperebene orientiertes Kettenglied (5) eingehängt.

## Beschreibung

Die Erfindung betrifft ein Verkürzungselement für eine Kette, insbesondere für die Spannkette einer Reifenkette mit einem im wesentlichen C-förmigen Grundkörper, dessen sich gegenüberliegende Enden einen ersten und einen zweiten Haken für Glieder der zu verkürzenden Kette bilden und dessen Dicke kleiner als die lichte Weite der Glieder der Kette ist.

Ein Verkürzungselement der vorstehenden Art ist aus der DE 30 14 061 C2 bekannt. Das bekannte Verkürzungselement besteht aus einer Platte mit zwei im wesentlichen parallelen Schlitzen, die über einen Querschlitz miteinander verbunden sind. In sich gegenüberliegende Enden der Schlitze des Verkürzungselementes sind die Endglieder zweier durch das Verkürzungselement miteinander verbundener Abschnitte des zu verkürzenden Kettenstranges eingehängt. Während im unverkürzten Zustand des Kettenstranges beide Endglieder der Kettenstrangabschnitte im längeren der beiden Schlitze geführt sind, ist im verkürzten Zustand mindestens ein Endglied in den kürzeren der beiden Schlitze eingehängt. Das bekannte Verkürzungselement vermag nicht voll zu befriedigen. So läßt die Festigkeit seines Grundkörpers dann zu wünschen übrig, wenn der Kettenstrang im unverkürzten Zustand zur Übertragung größerer Kräfte genutzt wird. Hinzu kommt, daß ohne völliges Aushängen eines Kettengliedes lediglich eine Verkürzung in zwei Stufen möglich ist.

Ein Verkürzungselement, welches sowohl bezüglich seines Aufbaues und seiner Handhabungsweise als auch bezüglich seiner Schwächen weitgehend mit dem Verkürzungselement nach der DE 30 14 061 C2 übereinstimmt, zeigt die CH-PS 469 579. Bei dessen zweiten Verkürzungselement ragt in den Querschlitz ein stiftartiger Vorsprung, der zur Aufnahme eines als Verriegelungselement für die in die Schlitze eingehängten Kettenglieder nutzbaren Gummischlauches dient. Der Vorsprung kann infolge seiner langen, dünnen Ausbildung beim Einsatz leicht verbogen werden oder gar brechen. Es besteht mithin eine gewisse Gefahr, daß es zu einer unbeabsichtigten Trennung des Verkürzungselementes von einem oder beiden Kettenstrangabschnitten kommt.

Der Erfindung liegt die Aufgabe zugrunde, ein Verkürzungselement zu schaffen, das als integraler Bestandteil eines Kettenstranges dessen Verkürzung in mehreren Stufen zuläßt und das leicht handhabbar ist. Diese Aufgabe wird erfindungsgemäß dadurch gelöst, daß der erste der beiden Haken mit zwei Stützflächen für Kettenglieder unterschiedlicher Orientierung versehen ist, daß die erste der beiden Stützflächen im Bereich des Überganges vom ersten Haken zum die beiden Haken miteinander verbindenen Teil des Grundkörpers angeordnet ist und zur Abstützung eines senkrecht zur Ebene des Grundkörpers orientierten Gliedes der unverkürzten Kette dient, während die zweite Stützfläche von der ersten Stützfläche zum Ende der Zinke des ersten Hakens verläuft und nach einer Schwenkung des Grundkörpers um 180° zur Abstützung der Außenseite des Buges eines in der Ebene des Grundkörpers liegenden Gliedes der verkürzten Kette nutzbar ist.

Um mit dem erfindungsgemäßen Verkürzungselement eine Verkürzung eines Kettenstranges vorzunehmen, braucht man das Verkürzungselement lediglich um etwa 180° um den Bug eines in das Verkürzungselement eingehängten Kettengliedes zu schwenken und am Schluß der Schwenkbewegung in ein Glied des Abschnittes des Kettenstranges einzuhängen, zu dem auch das Glied gehört, um dessen Bug die Schwenkbewegung erfolgte.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform eines Verkürzungselementes. Es zeigen:
Fig. 1 - 4 mehrere Phasen eines Verkürzungsvorganges und
Fig. 5 die perspektivische Ansicht der Enden des in den Figuren 1 - 4 dargestellten verkürzten Kettenstranges.

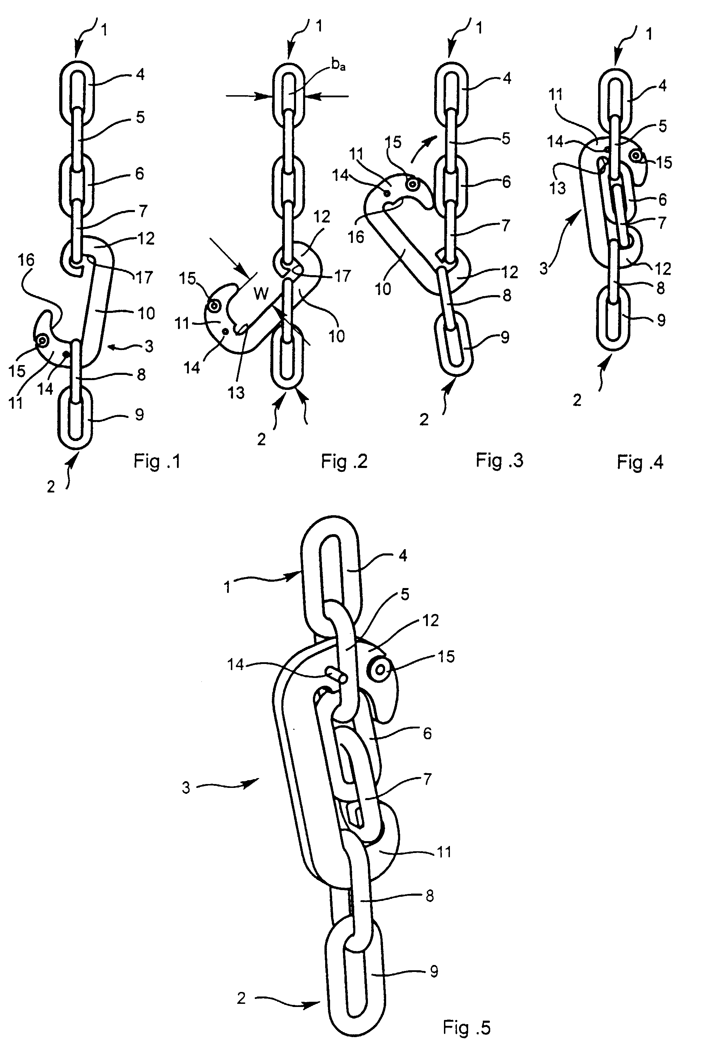

In den Figuren sind 1 und 2 zwei durch ein Verkürzungselement 3 miteinander verbundene Abschnitte einer Kette, von denen lediglich die Glieder 4,5,6,7,8,9 gezeigt sind. Das Verkürzungselement 3 besitzt einen im wesentlichen C-förmigen Grundkörper 10, dessen sich gegenüberliegende Enden einen ersten Haken 11 und einen zweiten Haken 12 bilden. In Figur 1 ist in den Haken 12 ein Glied 7 des Kettenstrangabschnittes 1, in den Haken 11 ein Glied 8 des Kettenstrangabschnittes 2 eingehängt. Das Kettenglied 8 stützt sich in der in Figur 1 dargestellten Position gegen eine Stützfläche 13 des ersten Hakens 11 ab, deren Form an die Form des innen liegenden Bereiches seines Buges angepaßt ist. Ein Aushängen des Kettenglieds 8 aus dem ersten Haken 11 wird durch einen Anschlag 14 verhindert, der von einem in einer Querbohrung des Hakens 11 gehaltenen, beidseits über dessen Seitenflächen vorstehenden Stift gebildet wird.

Um die die Kettenstrangabschnitte 1 und 2 aufweisende Kette zu verkürzen, wird das Verkürzungselement 3 um etwa 180° geschwenkt und die Zinke des Hakens 11 am Schluß der Schwenkbewegung in den lichten Innenraum des Gliedes 5 oder aber eines anderen Gliedes gleicher Orientierung des Kettenstrangabschnittes 1 eingehängt, und zwar unter Überwindung eines elastischen Arretierungsnockens 15. Am Ende des Verkürzungsvorganges stützt sich der Bug des Kettengliedes 6 gegen eine zweite Stützfläche 16 des ersten Hakens 11 ab, dessen lichte Weite w im wesentlichen gleich der äußeren Breite bₐ der Glieder des Kettenstranges ist. Das zuvor gegen die Stützfläche 13 anliegende Glied 8 des Kettenstrangabschnittes 2 stützt sich nunmehr an einer Stützfläche 17 im Bereich des zweiten Hakens 12 ab.

Wie aus der vorstehenden Beschreibung hervorgeht, läßt sich eine mit einem Verkürzungselement der beschriebenen Art ausgestattete Kette um stark differierende Beträge verkürzen, ohne daß eine Trennung des Verkürzungselementes 3 von einem der Kettenstrangabschnitte 1,2 vonnöten ist.

## Patentansprüche

1. Verkürzungselement für eine Kette, insbesondere für die Spannkette einer Reifenkette mit einem im wesentlichen C-förmigen Grundkörper (10), dessen sich gegenüberliegende Enden einen ersten und einen zweiten Haken (11,12) für Glieder (7,8) der zu verkürzenden Kette bilden und dessen Dicke kleiner als die lichte Weite der Glieder der Kette ist, **dadurch gekennzeichnet**, daß der erste der beiden Haken (11) mit zwei Stützflächen (13,16) für Kettenglieder unterschiedlicher Orientierung versehen ist, daß die erste der beiden Stützflächen (13,16) im Bereich des Überganges vom ersten Haken (11) zum die beiden Haken (11,12) miteinander verbindenen Teil des Grundkörpers (10) angeordnet ist und zur Abstützung eines senkrecht zur Ebene des Grundkörpers (10) orientierten Gliedes (8) der unverkürzten Kette dient, während die zweite Stützfläche (16) von der ersten Stützfläche (13) zum Ende der Zinke des ersten Hakens (11) verläuft und nach einer Schwenkung des Grundkörpers (10) um 180° zur Abstützung der Außenseite des Buges eines in der Ebene des Grundkörpers liegenden Gliedes (6) der verkürzten Kette nutzbar ist.

2. Verkürzungselement nach Anspruch 1, **dadurch gekennzeichnet**, daß die Weite (w) des die beiden Stützflächen (13,16) aufweisenden Hakenmaules des ersten Hakens (11) im wesentlichen gleich der äußeren Breite (bₐ) von in den ersten Haken (11) einhängbaren Rundstahlgliedern ist.

3. Verkürzungselement nach Anspruch 1 oder 2, **dadurch gekennzeichnet**, daß das freie Ende der Zinke des zweiten Hakens (12) eine zur unverlierbaren Halterung eines senkrecht zur Ebene des Grundkörpers (10) orientierten Gliedes (7) der zu verkürzenden Kette (1,2) dienende Öse bildet, an die sich eine Stützfläche (17) für das sich vor der 180°-Schwenkung an einer Stützfläche (13) des ersten Hakens (11) abstützende, ebenfalls senkrecht zur Ebene des Grundkörpers (10) orientierte Glied (8) der Kette anschließt.

4. Verkürzungselement nach einem oder mehreren der Ansprüche 1 bis 3, **dadurch gekennzeichnet**, daß der mit zwei Stützflächen (13,16) ausgestattete erste Haken (11) mit mindestens einem seitlich über seine Zinke vorstehenden elastischen Arretierungsnocken (15) versehen ist.

5. Verkürzungselement nach einem oder mehreren der Ansprüche 1 bis 4, **dadurch gekennzeichnet**, daß der mit den zwei Stützflächen (13,16) ausgestattete erste Haken (11) einen Anschlag (14) aufweist, der einerseits ein Aushängen des senkrecht zur Ebene des Grundkörpers (10) orientierten Gliedes (8) der unverkürzten Kette (1,2) verhindert und andererseits die Schwenkbewegung des Grundkörpers (10) begrenzt.

6. Verkürzungselement nach einem der Ansprüche 1 bis 5, **dadurch gekennzeichnet**, daß eine der beiden Stützflächen (13) des ersten Hakens (11) von einem Teil einer Rastnut für den Bug eines Gliedes (8) der unverkürzten Kette (1,2) gebildet wird.

7. Verkürzungselement nach einem oder mehreren der Ansprüche 1 bis 6, **dadurch gekennzeichnet**, daß sein Grundkörper (10) als Stanzteil ausgebildet ist.

8. Verkürzungselement nach einem der Ansprüche 5 bis 7, **dadurch gekennzeichnet**, daß der Anschlag (14) von einem in eine Querbohrung des ersten Hakens (12) gehaltenen, beidseits über die Seitenflächen des ersten Hakens (11) vorstehenden Stift gebildet wird.
